# EUROPÄISCHE PATENTSCHRIFT

(11) **EP 3 829 954 B1**
(45) Veröffentlichungstag und Bekanntmachung des Hinweises auf die Patenterteilung: **09.11.2022**
(21) Anmeldenummer: 19755534.5
(22) Anmeldetag: 26.07.2019
(51) Int. Cl.: B62D 1/06, B62D 1/04, B60H 1/00

(54) **BEDIENEINHEIT FÜR EIN LENKRAD UND LENKRAD HIERMIT**
OPERATING UNIT FOR A STEERING WHEEL AND STEERING WHEEL WITH SUCH AN OPERATING UNIT
UNITÉ DE COMMANDE POUR UN VOLANT ET VOLANT DOTÉ D'UNE TELLE UNITÉ DE COMMANDE

(30) Priorität: 03.08.2018 EP 18187380
(43) Veröffentlichungstag der Anmeldung: 09.06.2021
(73) Patentinhaber: Audio Mobil Elektronik GmbH, 5282 Braunau am Inn - Ranshofen (AT)
(72) Erfinder: STOTTAN, Thomas, 5282 Braunau am Inn (AT); FREI, Richard, 5280 Braunau am Inn (AT); HATHEIER, Thomas, 4963 St. Peter am Hart (AT); LANDGRAF, Gerhard, 5280 Braunau am Inn (AT)
(74) Vertreter: Jell, Friedrich
(86) Internationale Anmeldenummer: PCT/EP2019/070279
(87) Internationale Veröffentlichungsnummer: WO 2020/025506

(56) Entgegenhaltungen:
- EP-A2- 1 213 068
- EP-B1- 2 537 173
- DE-B3-102015 219 486
- US-A1- 2017 217 284

## Beschreibung

### Technisches Gebiet

Die Erfindung betrifft ein Lenkrad und eine Bedieneinheit für dieses Lenkrad mit einem in eine Lenkradspeiche des Lenkrads einsetzbaren Gehäuse, das mindestens eine Gehäuseseitenwand und einen Gehäuseboden aufweist, mit einem im Gehäuse vorgesehenen elektrischen Kontaktelement und mit mindestens einem am Gehäuse beweglich gelagerten Betätigungselement, das elektrisch schaltend auf das Kontaktelement einwirkt.

### Stand der Technik

In Öffnungen einer Lenkradspeiche eines Lenkrads vorgesehene Bedieneinheiten sind aus dem Stand der Technik bekannt (EP2537173B1). Derartige Vorrichtungen weisen ein in die Lenkradspeiche einsetzbares Gehäuse mit einer Gehäuseseitenwand und mit einem Gehäuseboden auf, welches Gehäuse meist mehrere elektrische Schalter, beispielweise auch Wippschalter, zur Betätigung von Geräten eines Kraftfahrzeugs, trägt. Die Schalter weisen hierzu ein im Gehäuse vorgesehenes Kontaktelement und ein am Gehäuse beweglich gelagertes Betätigungselement auf, welches Betätigungselement auf das Kontaktelement elektrisch schaltend einwirkt. Aufgrund vergleichsweise beengter Platzverhältnisse müssen solche Bedieneinheiten kompakte Bauverhältnisse erfüllen. Die EP2537173B1 zeigt den Oberbegriff des unabhängigen Anspruchs.

Desweitern ist es aus dem Stand der Technik bekannt, Lenkräder von Kraftfahrzeugen zu temperieren (DE29817868U1) - und zwar mit Hilfe von in Lenkradspeichen eingesetzten Ventilatoren. Dies ist allerdings vergleichsweise aufwendig und bedarf zudem auch einer speziellen Schalenkonstruktion des Lenkrads.

Zudem ist eine Lenkradkühlung aus der US2017/0217284A1 bekannt.

Die Erfindung hat sich daher ausgehend vom eingangs geschilderten Stand der Technik die Aufgabe gestellt, eine Bedieneinheit für ein Lenkrad in seiner Funktionalität zu erweitern, ohne dabei aber kompakte Bauverhältnisse aufzugeben.

### Darstellung der Erfindung

Die Erfindung löst die gestellte Aufgabe durch die Merkmale des Anspruchs 1.

Weist die Bedieneinheit einen Ventilator und einen vom Ventilator beaufschlagten Strömungskanal auf, kann die Bedieneinheit zur Lenkradtemperierung beitragen und damit in deren Funktionalität erweitert werden. Wird der Strömungskanal vom Gehäuseboden ausgebildet und weist der Strömungskanal am Gehäuse eine Einlassöffnung und eine Auslassöffnung auf, kann zudem eine geringe Baugröße an der Bedieneinheit sichergestellt bleiben. Dies unter anderem auf Basis des doppelten Bodens der Bedieneinheit zur Ausbildung des Strömungskanals, um so den Einfluss des Strömungskanals auf die Bautiefe der Bedieneinheit gering zu halten. Dies kann weiter verbessert werden, wenn der Strömungskanal die Einlassöffnung und die Auslassöffnung an unterschiedlichen Stirnseiten aufweist.

Die erfindungsgemäße Bedieneinheit kann daher zur Temperierung eines Lenkrads beitragen, sich aber dennoch durch kompakte Baugröße auszeichnen.

Die Baugröße der Bedieneinheit kann weiter vermindert werden, wenn der Ventilator ein axiales Laufrad aufweist.

Vorzugsweise ist das Laufrad dem Strömungskanal einlassseitig vorgesehen, um der Anatomie einer Lenkradspeiche entsprechend am Laufrad einen erhöhten Durchmesser zuzulassen, als dies bei der Auslassöffnung des Gehäuses möglich wäre. Mit einem erhöhten Druckverhältnis und damit verbesserten Temperierung des Lenkrads kann gerechnet werden.

Ist der Ventilator im Strömungskanal des Gehäusebodens vorgesehen, kann das Gehäuse der Bedieneinheit den Ventilator schützen und auch tragen. Dies reduziert den Konstruktionsaufwand an der Bedieneinheit weiter, zumal auf ein eigenes Ventilatorgehäuse verzichtet und der Gehäusebodens dieses ausbilden kann.

Alternativ ist auch vorstellbar, dass der Ventilator ein Ventilatorgehäuse aufweist, welches an das Gehäuse anschließt. Der Ventilator ist damit für Wartungszwecke vergleichsweise einfach zugänglich, womit die Handhabung der Bedieneinheit weiter erleichtert werden kann - dies insbesondere, wenn das Ventilatorgehäuse des Ventilators an den Gehäuseboden anschließt.

Eine einfache und sichere Verbindung zwischen dem Gehäuse der Bedieneinheit und dem Ventilatorgehäuse kann durch eine Rastverbindung ermöglicht werden. Hierzu bildet das Gehäuse mindestens einen Rasthaken aus, der in eine Rastausnehmung am Ventilatorgehäuse einrastet und damit das Ventilatorgehäuse mit dem Gehäuse fest verbindet. Vorzugsweise ist diese Verbindung lösbar, um einen Austausch des Ventilators - etwa für Wartung oder Reparatur - zu erleichtern.

Die Montage des Ventilators kann weiter erleichtert werden, wenn der Rasthaken in Verlängerung des Strömungskanals verläuft.

Die Baugröße der Bedieneinheit kann zudem weiter verringert werden, wenn der Gehäuseboden eine Ausnehmung aufweist, in die der Ventilator vorgesehen ist. Zudem kragt damit der Ventilator dem Gehäuse nicht vor, was die Montage die Bedieneinheit weiter erleichtern kann.

Die Montage der Bedieneinheit an einem Lenkrad kann sich dadurch erleichtern, dass das Gehäuse zu seiner Befestigung an der Lenkradspeiche mindestens ein Rastelement ausbildet.

Verjüngt sich der Strömungskanal im Querschnitt vom Ventilator zur Auslassöffnung hin kann eine sich dadurch ergebende Druckerhöhung die Dynamik in der Temperierung des Lenkrads weiter verbessert werden.

Die erfindungsgemäße Bedieneinheit eignet sich besonders für ein Lenkrad mit einer Lenkradspeiche, die einen Speicheninnenkanal aufweist. Eine genaue Temperierung des Lenkrads kann ermöglicht werden, wenn der Strömungskanal der in die Lenkradspeiche eingesetzten Bedieneinheit mit dem Speicheninnenkanal des Lenkrads strömungsverbunden ist.

Für eine ausreichende Kopplung des Ventilators mit dem Speicheninnenkanal kann gesorgt werden, wenn die Auslassöffnung der Bedieneinheit an den Speicheninnenkanal der Lenkradspeiche strömungsdicht anschließt. Zudem kann damit auf konstruktiv einfacher Weise ein strömungstechnischer Kurzschluss am Ventilator vermieden werden. Mit einer erhöhten Effizienz der Temperierung sowie mit einer verbesserten Temperaturführung kann gerechnet werden.

### Kurze Beschreibung der Zeichnungen

In den Figuren ist beispielsweise der Erfindungsgegenstand anhand einer Ausführungsvariante näher dargestellt. Es zeigen
Fig. 1 eine Schnittansicht auf eine Bedieneinheit und
Fig. 2 eine Draufsicht auf die Bedieneinheit nach Fig. 1.

### Wege zur Ausführung der Erfindung

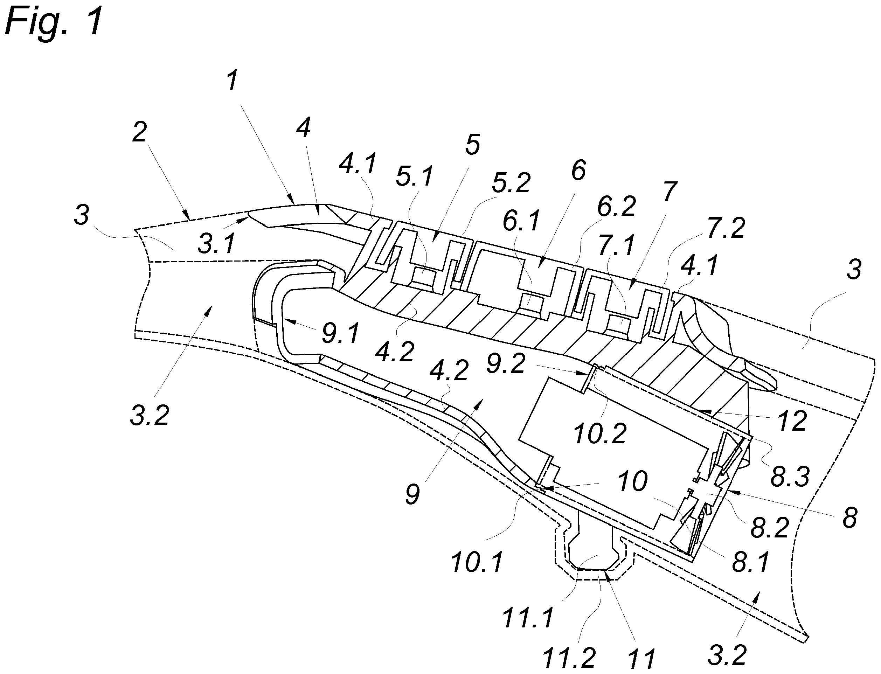

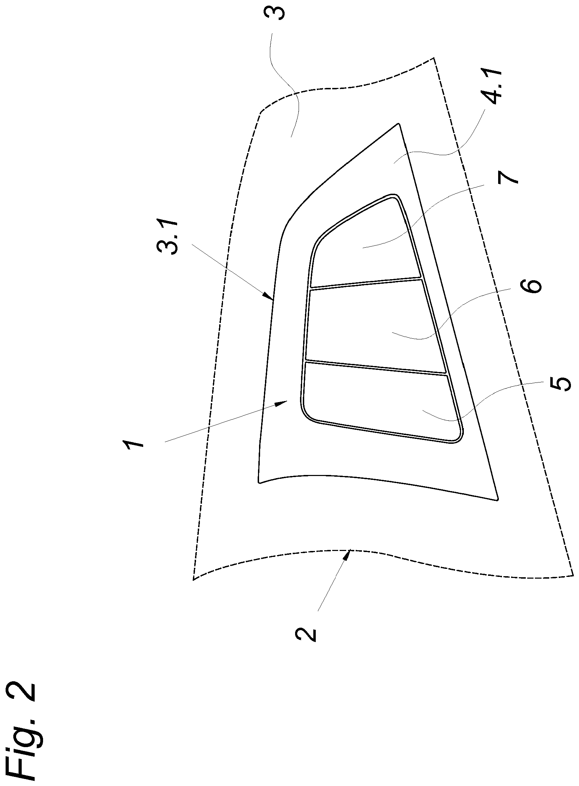

Nach Fig. 1 wird beispielsweise eine Bedieneinheit 1 für ein strichliert in Fig. 1 dargestelltes Lenkrad 2 in einer Schnittansicht dargestellt. Die Bedieneinheit 1 ist in einer Lenkradspeiche 3 des Lenkrads 2 lösbar befestigt - hierzu weist die Lenkradspeiche 3 eine Aufnahme 3.1 auf, in die das Gehäuse 4 der Bedieneinheit 1 vorzugsweise bündig mit dem Lenkrad eingesetzt ist, wie dies auch in einer Draufsicht nach Fig. 2 zu erkennen ist.

Das Gehäuse 4 weist eine geschlossene Gehäuseseitenwand 4.1 und einen Gehäuseboden 4.2 auf, zudem trägt es mehrere elektrische Schalter 5, 6, 7, wie auch in Fig. 2 zu entnehmen. Diese Schalter 5, 6, 7 bilden sich jeweils aus einem im Gehäuse 4 vorgesehenen elektrischen Kontaktelement 5.1, 6.1, 7.1 und je einem am Gehäuse 4 beweglich gelagerten Betätigungselement 5.2, 6.2, 7.2. Das Betätigungselement 5.2, 6.2, 7.2 wirkt elektrisch schaltend auf das Kontaktelement 5.1, 6.1, 7.1 ein. Beispielsweise handelt es sich bei den elektrischen Schaltern 5, 7 um Drucktasten und beim dazu mittigen Schalter 6 um einen Wipptaster.

Zudem umfasst die Bedieneinheit 1 einen Ventilator 8 und einen vom Ventilator 8 beaufschlagten Strömungskanal 9 auf, mit dem das Lenkrad 2 temperiert - beispielsweise gekühlt und/oder geheizt - werden kann. Der Strömungskanal 9 wird vom Gehäuseboden 4.2 ausgebildet, welcher in diesem Bereich des Strömungskanals 9 als doppelter Boden ausgeführt ist. Durch diese Konstruktion wird eine geringe Bautiefe der Bedieneinheit 1 gewährleistet.

Dies zudem auch dadurch, dass das Gehäuse 4 die Einlassöffnung und die Auslassöffnung 9.1, 9.2 an unterschiedlichen Stirnseiten des Strömungskanals 9 aufweist. Dies erleichtert das Anschließen der Bedieneinheit 1 an den Speicheninnenkanal 3.2 der Lenkradspeiche 3. Diese Einlass- und Auslassöffnung 9.1, 9.2 sind zudem am Gehäuseboden 4.2 vorgesehen, was die Konstruktion im Bereich des Strömungskanals weiter vereinfacht.

Der Ventilator 8 weist einen elektrischen Antrieb 8.1, ein mit dem Antrieb 8.1 antriebsverbundenes axiales Laufrad 8.2, und ein Ventilatorgehäuse 8.3 auf, um eine kompakte Bauform zu gewährleisten. Das Ventilatorgehäuse 8.3 schützt Antrieb 8.1 und Laufrad 8.2.

Das Ventilatorgehäuse 8.3 schließt an die Einlassöffnung 9.2 an und ist über eine erste Rastverbindung 10 mit dem Gehäuse 4 des Bedieneinheit 1 lösbar und fest verbunden. Diese Rastverbindung 10 wird durch Rasthaken 10.1 ausbildet, die in Rastausnehmungen 10.2 am Ventilatorgehäuse 8.3 einrasten. Ventilator 8 und Gehäuse 4 halten so standfest zusammen. Zudem verlaufen die Rasthaken 10.1 in Verlängerung des Strömungskanals 9, was eine einfache Montage des Ventilators 8 am Gehäuse 4 ermöglicht und auch Torsionskräfte auf die Rastverbindung 10 vermeidet.

Durch das Vorsehen des Ventilators 8 an der Einlassöffnung 9.2 ist das Laufrad 8.2 dem Strömungskanal 9 einlassseitig vorgesehen, was die Konstruktion im Bereich des Ventilators entspannt. Durch die erhöhte Bautiefe der Lenkradspeiche 3 in diesem Bereich ist es nämlich möglich, ein Laufrad 8.2 mit einem ausreichend großen Durchmesser vorzusehen, um so hohe Volumenströme zu erzeugen. Dies ermöglich ein genaues Temperieren des Lenkrads 2.

Der Gehäuseboden 4.2 weist eine Ausnehmung 12 aufweist, die an die Einlassöffnung 9.2 des Strömungskanals 9 anschließt. In dieser Ausnehmung 12 ist der Ventilator 8 vorgesehen und derart ausgebildet, dass der dort vorgesehene Ventilator 8 dem Gehäuse 4 seitlich nicht übersteht. Damit ist das Einsetzen der Bedieneinheit 1 in die Aufnahme 3.1 an der Lenkradspeiche 3 erleichtert. Die Ausnehmung kann beispielsweise einfach konstruktiv gelöst dadurch gebildet werden, dass nach der Einlassöffnung 9.2 die obere Gehäusebodenwand des Gehäusebodens 4.2 der unteren Gehäusebodenwand des Gehäusebodens 4.2 vorkragt.

Alternativ ist vorstellbar, dass der Ventilator 8 im Strömungskanal 9 des Gehäusebodens 4.2 vorgesehen ist, was strichliert in der Fig. 1 dargestellt ist. Damit wird für den Ventilator 8 kein Ventilatorgehäuse 8.3 benötigt - der Gehäuseboden 4.2 kann so als Träger der restlichen Bauteile des Ventilators 8 dienen.

Die Bedieneinheit 1 ist mit der Lenkradspeiche 3 über eine zweite Rastverbindung 11 lösbar und fest verbunden. Hierzu bildet das Gehäuse 4 ein, beispielsweise geneigt zum Gehäuseboden 4.2 verlaufende, Rastelement 11.1 auf, das in eine komplementäre dazu ausgebildete Raste 11.2 an der Lenkradspeiche 3 einrastet.

Zudem schließt die Auslassöffnung 9.1 an den Speicheninnenkanal 3.2 strömungsdicht an, was einen Kurzschluss in der Luftführung zur Temperierung des Lenkrads 2 verhindert.

## Patentansprüche

1. Bedieneinheit für ein Lenkrad (2) mit einem in eine Lenkradspeiche (3) des Lenkrads (2) einsetzbaren Gehäuse (4), das mindestens eine Gehäuseseitenwand (4.1) und einen Gehäuseboden (4.2) aufweist, mit einem im Gehäuse (4) vorgesehenen elektrischen Kontaktelement (5.1, 6.1, 7.1) und mit mindestens einem am Gehäuse (4) beweglich gelagerten Betätigungselement (5.2, 6.2, 7.2), das elektrisch schaltend auf das Kontaktelement (5.1, 6.1, 7.1) einwirkt, **dadurch gekennzeichnet, dass** die Bedieneinheit (1) einen Ventilator (8) für eine Lenkradtemperierung und einen vom Ventilator (8) beaufschlagten Strömungskanal (9) aufweist, welcher Strömungskanal (9) vom Gehäuseboden (4.2) ausgebildet wird und am Gehäuse (4) eine Einlass- und Auslassöffnung (9.2 und 9.1) aufweist.

2. Bedieneinheit nach Anspruch 1, **dadurch gekennzeichnet, dass** der Ventilator (8) ein axiales Laufrad (8.2) aufweist.

3. Bedieneinheit nach Anspruch 2, **dadurch gekennzeichnet, dass** das Laufrad (8.2) dem Strömungskanal (9) einlassseitig vorgesehen ist.

4. Bedieneinheit nach einem der Ansprüche 1 bis 3, **dadurch gekennzeichnet, dass** der Ventilator (8) im Strömungskanal (9) des Gehäusebodens (4.2) vorgesehen ist.

5. Bedieneinheit nach einem der Ansprüche 1 bis 3, **dadurch gekennzeichnet, dass** der Ventilator (8) ein Ventilatorgehäuse (8.3) aufweist, welches an das Gehäuse (4) anschließt.

6. Bedieneinheit nach Anspruch 5, **dadurch gekennzeichnet, dass** das Ventilatorgehäuse (8.3) des Ventilators (8) an den Gehäuseboden (4.2) anschließt.

7. Bedieneinheit nach Anspruch 5 oder 6, **dadurch gekennzeichnet, dass** das Gehäuse (4) mindestens einen Rasthaken (10.1) ausbildet, der in eine Rastausnehmung (10.2) am Ventilatorgehäuse (8.3) einrastet und damit das Ventilatorgehäuse (8.3) mit dem Gehäuse (4) fest verbindet.

8. Bedieneinheit nach Anspruch 7, **dadurch gekennzeichnet, dass** der Rasthaken (10.1), der in eine Rastausnehmung (10.2) am Ventilatorgehäuse (8.3) einrastet, damit das Ventilatorgehäuse (8.3) mit dem Gehäuse (4) lösbar verbindet.

9. Bedieneinheit nach Anspruch 7 oder 8, **dadurch gekennzeichnet, dass** der Rasthaken (10.1) in Verlängerung des Strömungskanals (9) verläuft.

10. Bedieneinheit nach einem der Ansprüche 6 bis 9, **dadurch gekennzeichnet, dass** der Gehäuseboden (4.2) eine Ausnehmung (12) aufweist, in die der Ventilator (8) vorgesehen ist.

11. Bedieneinheit nach einem der Ansprüche 1 bis 10, **dadurch gekennzeichnet, dass** das Gehäuse (4) zu seiner Befestigung an der Lenkradspeiche (3) mindestens ein Rastelement (11.1) ausbildet.

12. Bedieneinheit nach einem der Ansprüche 1 bis 11, **dadurch gekennzeichnet, dass** sich der Strömungskanal (9) im Querschnitt vom Ventilator (8) zur Auslassöffnung (9.1) hin verjüngt.

13. Lenkrad mit einer Lenkradspeiche (3), die einen Speicheninnenkanal (3.2) aufweist, und mit einer in die Lenkradspeiche (3) eingesetzten Bedieneinheit (1) nach einem der Ansprüche 1 bis 12, wobei der Strömungskanal (9) der Bedieneinheit (1) mit dem Speicheninnenkanal (3.2) strömungsverbunden ist.

14. Lenkrad nach Anspruch 13, **dadurch gekennzeichnet, dass** die Auslassöffnung (9.1) der Bedieneinheit (1) an den Speicheninnenkanal (3.2) der Lenkradspeiche (3) strömungsdicht anschließt.

## Claims

1. An operator control unit for a steering wheel (2) having a housing (4) which is insertable into a steering wheel spoke (3) of the steering wheel (2) and which has at least one housing side wall (4.1) and a housing base (4.2), having an electrical contact element (5.1, 6.1, 7.1) provided in the housing (4), and having at least one actuating element (5.2, 6.2, 7.2) which is mounted movably on the housing (4) and which acts with an electrical switching action on the contact element (5.1, 6.1, 7.1), **characterized in that** the operator control unit (1) has a fan (8) for a steering wheel temperature control arrangement and has a flow channel (9) which is acted on by the fan (8), which flow channel (9) is formed by the housing base (4.2) and has an inlet and outlet opening (9.2 and 9.1) on the housing (4).

2. The operator control unit according to claim 1, **characterized in that** the fan (8) has an axial impeller (8.2).

3. The operator control unit according to claim 2, **characterized in that** the impeller (8.2) is provided at the inlet end of the flow channel (9).

4. The operator control unit according to one of claims 1 to 3, **characterized in that** the the fan (8) is provided in the flow channel (9) of the housing base (4.2).

5. The operator control unit according to one of claims 1 to 3, **characterized in that** the fan (8) has a fan housing (8.3), which adjoins the housing (4).

6. The operator control unit according to claim 5, **characterized in that** the fan housing (8.3) of the fan (8) adjoins the housing base (4.2).

7. The operator control unit according to claim 5 or 6, **characterized in that** the housing (4) forms at least one detent hook (10.1), which engages in detent fashion in a detent opening (10.2) in the fan housing (8.3) and thus firmly connects the fan housing (8.3) to the housing (4).

8. The operator control unit according to claim 7, **characterized in that** the detent hook (10.1), which engages in detent fashion in a detent opening (10.2) in the fan housing (8.3), thus connects the fan housing (8.3) to the housing (4) in a detachable way.

9. The operator control unit according to claim 7 or 8, **characterized in that** the detent hook (10.1) extends in the imaginary extension of the flow channel (9).

10. The operator control unit according to one of claims 6 to 9, **characterized in that** the housing base (4.2) has a recess (12) into which the fan (8) is inserted.

11. The operator control unit according to one of claims 1 to 10, **characterized in that** the housing (4) forms at least one detent element (11.1) for fastening it to the steering wheel spoke (3).

12. The operator control unit according to one of claims 1 to 11, **characterized in that** the cross-section of the flow channel (9) tapers from the fan (8) toward the outlet opening (9.1).

13. A steering wheel having a steering wheel spoke (3) that has an internal spoke channel (3.2) and having an operator control unit (1) that is inserted into the steering wheel spoke (3) according to one of claims 1 to 12, wherein the flow channel (9) of the operator control unit (1) is fluidically connected to the internal spoke channel (3.2).

14. The steering wheel according to claim 13, **characterized in that** the outlet opening (9.1) of the operator control unit (1) adjoins the internal spoke channel (3.2) of the steering wheel spoke (3) in a fluidically sealed way.

## Revendications

1. Unité de commande pour un volant de direction (2), avec un boîtier (4) pouvant être inséré dans un rayon (3) du volant (2), qui comporte au moins une paroi latérale de boîtier (4.1) et un fond de boîtier (4.2), avec un élément de contact électrique (5.1, 6.1, 7.1) prévu dans le boîtier (4) et avec au moins un élément d'actionnement (5.2, 6.2, 7.2) supporté de façon mobile dans le boîtier, qui agit sur l'élément de contact (5.1, 6.1, 7.1) dans le sens d'une commutation électrique, **caractérisée en ce que** l'unité de commande (1) comporte un ventilateur (8) pour une régulation de la température du volant et un conduit de circulation (9) sur lequel agit le ventilateur (8), lequel conduit de circulation (9) est formé par le fond de boîtier (4.2) et comporte une ouverture d'entrée et de sortie (9.2 et 9.1) sur le boîtier (4).

2. Unité de commande selon la revendication 1, **caractérisée en ce que** le ventilateur (8) comporte une roue (8.2) axiale.

3. Unité de commande selon la revendication 2, **caractérisée en ce que** la roue (8.2) est prévue du côté d'entrée du conduit de circulation (9).

4. Unité de commande selon l'une des revendications 1 à 3, **caractérisée en ce que** le ventilateur (8) est prévu dans le conduit de circulation (9) du fond de boîtier (4.2).

5. Unité de commande selon l'une des revendications 1 à 3, **caractérisée en ce que** le ventilateur (8) comporte un boîtier de ventilateur (8.3) qui est rattaché au boîtier (4).

6. Unité de commande selon la revendication 5, **caractérisée en ce que** le boîtier de ventilateur (8.3) du ventilateur (8) est rattaché au fond de boîtier (4.2).

7. Unité de commande selon la revendication 5 ou 6, **caractérisée en ce que** le boîtier (4) forme au moins un crochet d'enclenchement (10.1) qui s'enclenche dans un creux d'enclenchement (10.2) du boîtier de ventilateur (8.3) et assemble ainsi à demeure le boîtier de ventilateur (8.3) avec le boîtier (4).

8. Unité de commande selon la revendication 7, **caractérisée en ce que** le crochet d'enclenchement (10. 1) qui s'enclenche dans un creux d'enclenchement (10.2) du boîtier de ventilateur (8.3) assemble ainsi le boîtier de ventilateur (8.3) au boîtier (4) de façon amovible.

9. Unité de commande selon la revendication 7 ou 8, **caractérisée en ce que** le crochet d'enclenchement (10.1) est dirigé dans le prolongement du conduit de circulation (9).

10. Unité de commande selon l'une des revendications 6 à 9, **caractérisée en ce que** le fond de boîtier (4.2) comporte un creux (12) dans lequel le ventilateur (8) est prévu.

11. Unité de commande selon l'une des revendications 1 à 10, **caractérisée en ce que** le boîtier (4) forme au moins un élément d'enclenchement (11.1) en vue de sa fixation au rayon du volant (3).

12. Unité de commande selon l'une des revendications 1 à 11, **caractérisée en ce que** la section du conduit de circulation (9) diminue du ventilateur (8) à l'ouverture de sortie (9.1).

13. Volant avec un rayon (3) comportant un conduit intérieur de rayon (3.2) et avec une unité de commande (1) selon l'une des revendications 1 à 12 introduite dans le rayon du volant (3), dans lequel le conduit de circulation (9) de l'unité de commande (1) communique en vue de l'écoulement avec le conduit intérieur de rayon (3.2).

14. Volant selon la revendication 13, **caractérisée en ce que** l'ouverture de sortie (9.1) de l'unité de commande (1) se raccorde au conduit intérieur de rayon (3.2) du rayon du volant (3) de façon étanche à l'écoulement.
